# EUROPÄISCHE PATENTANMELDUNG

(11) **EP 2 416 115 A1**
(43) Veröffentlichungstag der Anmeldung: **08.02.2012**
(21) Anmeldenummer: 11174625.1
(22) Anmeldetag: 20.07.2011
(51) Int. Cl.: G01C 3/22, G01S 11/12, G08G 1/16, B60W 30/16

(54) **Verfahren und Vorrichtung zum Bestimmen eines Abstands eines Fahrzeugs zu einem benachbarten Fahrzeug**

(30) Priorität: 03.08.2010 DE 102010033212
(71) Anmelder: Valeo Schalter und Sensoren GmbH, 74321 Bietigheim-Bissingen (DE)
(72) Erfinder: Gross, Michael, 74226 Nordheim (DE)

(57) **Zusammenfassung**

Es soll ein vereinfachtes Verfahren zum Bestimmen eines Abstands eines Fahrzeugs zu einem benachbarten Fahrzeug bereitgestellt werden. Hierzu wird ein Verfahren vorgeschlagen, das folgende Schritte aufweist: Aufnehmen eines Bilds (10) des benachbarten Fahrzeugs mit einer Kamera des Fahrzeugs, Identifizieren eines Objekts (3) an dem benachbarten Fahrzeug in dem Bild (10), Ermitteln einer Ausdehnung des Abbilds des identifizierten Objekts (3) und Bestimmen des Abstands der beiden Fahrzeuge anhand der ermittelten Ausdehnung. Dabei besitzt das Objekt eine vorgegebene reale Ausdehnung, sodass der Abstand alleine aus der Ausdehnung des Abbildes bestimmbar ist.

## Beschreibung

Die vorliegende Erfindung betrifft ein Verfahren zum Bestimmen eines Abstands eines Fahrzeugs zu einem benachbarten Fahrzeug durch Aufnehmen eines Bilds des benachbarten Fahrzeugs mit einer Kamera des Fahrzeugs, Identifizieren eines Objekts an dem benachbarten Fahrzeug in dem Bild, Ermitteln einer Ausdehnung des Abbilds des identifizierten Objekts und Bestimmen des Abstands der beiden Fahrzeuge anhand der ermittelten Ausdehnung. Darüber hinaus betrifft die vorliegende Erfindung eine entsprechende Vorrichtung zur Abstandsbestimmung mit einer Kamera und einer geeigneten Auswerteeinrichtung.

Bei Fahrerassistenzsystemen wird häufig der Abstand des Fahrzeugs zu einem benachbarten Fahrzeug, insbesondere zu einem vorausfahrenden Fahrzeug gemessen. Der gemessene beziehungsweise ermittelte Abstand wird dem Fahrer angezeigt oder er wird automatisch für die Fahrzeugführung verwertet. Die Abstandsbestimmung wird häufig über Stereo-Kameras oder über andere Sensoren, wie z. B. Radar, Ultraschall oder Laser, durchgeführt.

Aus der Druckschrift DE 10 2007 012 955 A1 ist ein Verfahren zur Abstandsmessung zwischen Fahrzeugen bekannt. Dabei wird zunächst ein zu dem benachbarten Fahrzeug benachbarter ortsfester Gegenstand zu einem ersten Zeitpunkt identifiziert. Anschließend wird die Zeit gemessen, bis das messende Fahrzeug den Gegenstand passiert, und anhand der gemessenen Zeit wird die Entfernung zu dem benachbarten Fahrzeug berechnet. Sodann wird die berechnete Entfernung mit der Größe der Abbildung des Merkmals verknüpft und es wird ein Bild des benachbarten Fahrzeugs aufgenommen. In dem Bild wird ein Merkmals des Fahrzeugs identifiziert und es wird die Giöiₗe der Abbildung des Merkmals in dem Bild ermittelt. Schließlich wird die Entfernung zu dem benachbarten Fahrzeug anhand der Größe der Abbildung abgeschätzt. Dieses Verfahren ist verhältnismäßig aufwändig, da ein separater statischer Referenzgegenstand festgelegt und beobachtet werden muss.

Darüber hinaus ist aus der Druckschrift DE 10 2005 022 882 A1 ein Verfahren und eine Vorrichtung zur Parkraumvermessung mittels einer Monokamera bekannt. Dabei wird eine Abbildung mittels der Monokamera aufgenommen, die Monokamera entlang eines Fahrwegs bewegt, und eine weitere Abbildung mittels der Monokamera aufgenommen, Anschließend wird eine Differenzabbildung erstellt und anhand dieser Differenzabbildung werden die Abmessungen eines Parkraums, der von der Monokamera aufgenommen wurde, ermittelt.

Die Aufgabe der vorliegenden Erfindung besteht darin, auf einfache Weise den Abstand eines Fahrzeugs zu einem benachbarten Fahrzeug zu bestimmen.

Erfindungsgemäß wird diese Aufgabe gelöst durch ein Verfahren zum Bestimmen eines Abstands eines Fahrzeugs zu einem benachbarten Fahrzeug durch Aufnehmen eines Bilds des benachbarten Fahrzeugs mit einer Kamera des Fahrzeugs, Identifizieren eines Objekts an dem benachbarten Fahrzeug in dem Bild, Ermitteln einer Ausdehnung des Abbilds des identifizierten Objekts und Bestimmen des Abstands der beiden Fahrzeuge anhand der ermittelten Ausdehnung, wobei das Objekt eine vorgegebene reale Ausdehnung besitzt, so dass der Abstand alleine aus der Ausdehnung des Abbilds bestimmbar ist.

Darüber hinaus wird erfindungsgemäß bereitgestellt eine Vorrichtung zum Bestimmen eines Abstands eines Fahrzeugs zu einem benachbarten Fahrzeug mit einer Kamera zum Aufnehmen eines Bilds des benachbarten Fahrzeugs, einer Auswerteeinrichtung zum identifizieren eines Objekts an dem benachbarten Fahrzeug in dem Bild, zum Ermitteln einer Ausdehnung des Abbilds des identifizierten Objekts und zum Bestimmen des Abstands der beiden Fahrzeuge anhand der ermittelten Ausdehnung, wobei das Objekt eine vorgegebene reale Ausdehnung besitzt, so dass mit der Auswerteeinrichtung der Abstand alleine aus der Ausdehnung des Abbilds bestimmbar ist.

In vorteilhafter Weise wird für die Bestimmung des Abstands der beiden Fahrzeuge ein Objekt mit vorgegebener Gestalt gewählt. Diese vorgegebene, bekannte Gestalt kann dann unmittelbar zur Bestimmung des Abstands herangezogen werden. Es muss dann nicht mühsam erst ein Objekt an einem Fahrzeug identifiziert und daraus ein Referenzbild für die Abstandsbestimmung gewonnen werden. Vielmehr kann das vorbekannte Objekt direkt als Referenz genutzt werden und nicht ein Abbild eines Objekts.

Vorzugsweise ist das Objekt ein amtliches Kennzeichen des benachbarten Fahrzeugs oder ein Teil davon. Nahezu jedes Fahrzeug besitzt ein amtliches Kennzeichen, so dass dieses zuverlässig zur Abstandsgewinnung herangezogen werden kann.

Alternativ kann es sich bei dem Objekt auch um einen Reifen des benachbarten Fahrzeugs handeln. Auch Reifen besitzen in einem bestimmten Rahmen vorgegebene Größen, so dass sie zuverlässig als Referenzobjekt herangezogen werden können.

Besonders vorteilhaft ist, wenn mindestens eine Ausdehnung des Objekts genormt ist. Damit kann auf eine eindeutig bestimmte Größe als Referenz zurückgegriffen werden.

Falls das Objekt ein amtliches Kennzeichen ist, kann sich die Ausdehnung des Abbilds auf die Breite und/oder Höhe der Außenabmessung des Kennzeichens beziehen. Insbesondere die Höhe eines amtliches Kennzeichens ist für einzeilige und zweizeilige Kennzeichen fest vorgegeben, so dass die Höhe als zuverlässige Referenz benutzt werden kann.

Darüber hinaus kann sich die Ausdehnung des Abbilds auch auf die Breite und/oder Höhe eines Buchstabens oder einer Zahl des Kennzeichens beziehen. Die Buchstaben oder Zahlen des Kennzeichens eignen sich als Referenzgrößen insbesondere dann, wenn der Abstand zwischen den beiden Fahrzeugen verhältnismäßig gering ist.

Alternativ kann sich die Ausdehnung des Abbilds auch auf eine Größe einer Sicherheitsplakette beziehen. Die TÜV_{~} oder Abgasuntersuchungsplaketten haben ebenfalls eine fest vorgegebene Größe und eignen sich daher ebenso zur Abstandsbestimmung insbesondere bei geringen Abständen.

In einer Ausführungsform des erfindungsgemäßen Verfahrens wird die Identität des Objekts dadurch plausibilisiert, dass die Ausdehnung des Abbilds mit einer weiteren Ausdehnung des Abbilds ins Verhältnis gesetzt wird, und geprüft wird, ob das Verhältnis in einem vorgegebenen Zahlenbereich liegt. So kann beispielsweise das Verhältnis Breite-zu-Höhe eines Kennzeichens überprüft werden, so dass es von anderen Rechtecken unterschieden werden kann.

Darüber hinaus kann die Identität des Objekts auch dadurch plausibilisiert werden, dass eine Abmessung des benachbarten Fahrzeugs in dem Bild ermittelt und die Ausdehnung des Abbilds des Objekts mit der ermittelten Abmessung verglichen wird. Auch auf diese Weise kann eine Information darüber gewonnen werden, ob es sich beispielsweise bei einem ermittelten Rechteck um ein Kennzeichen handelt.

Insgesamt kann so ein Verfahren zum Unterstützen eines Fahrers des Fahrzeugs durch Bestimmen des Abstands zu dem benachbarten Fahrzeug gemäß dem obenstehenden Verfahren und Anzeigen oder automatisches Verwerten dieses Abstands bei der Fahrzeugführung bereitgestellt werden. Es lässt sich somit eine einfache Abstandsbestimmung bei einem Fahrerassistenzsystem realisieren.

Wird der Abstand zu dem benachbarten Fahrzeug zusätzlich auf eine andere Weise bestimmt (z. B. durch Ultraschall, Stereokamera usw.), so können die beiden redundanten Abstandsbestimmungsverfahren dazu verwendet werden, einen Abstand zu plausibilisieren.

Wie oben bereits angedeutet wurde, lässt sich das erfindungsgemäß Verfahren bzw. die erfindungsgemäße Vorrichtung zur Bestimmung eines Abstands vorteilhaft in einem Fahrzeug einsetzen. Dabei kann die Vorrichtung in eine Fahrerassistenzeinrichtung bzw. ein Assistenzsystem, z. B. ein Parkassistenzsystem, ein ACC-System, ein Spurhaltesystem, ein Spurwechselsystem, einen Fernlichtassistenzen und dergleichen integriert sein.

Die vorliegende Erfindung wird nun anhand der beigefügten Zeichnungen näher erläutert, in denen zeigen:
- Fig. 1: ein Bild eines vorausfahrenden Fahrzeugs;
- Fig. 2: ein amtliches Kennzeichen und
- Fig. 3: das amtliche Kennzeichen von Fig. 2 in vergrößerter Darstellung.

Die nachfolgend näher geschilderten Ausführungsbeispiele stellen bevorzugte Ausführungsformen der vorliegenden Erfindung dar.

Eine in einem Fahrzeug verbaute Frontkamera, welche beispielsweise für den Spurassistenten verwendet wird, wird erfindungsgemäß für die Abstandsbestimmung und ggf. auch für die Abstandsplausibilisierung eingesetzt. Alternativ kann dafür auch eine Rückfahrkamera verwendet werden.

Generell sucht sich die Kamera ein vorgegebenes bzw. normiertes Objekt wie beispielsweise ein amtliches Kennzeichen oder die Schriftzeichen auf dem amtlichen Kennzeichen am vorausfahrenden Fahrzeug. Beim Rückwärtsfahren kann dies beispielsweise auch das Kennzeichen eines eine Parklücke begrenzenden Fahrzeugs sein. Die Abmessungen des vorgegebenen bzw. normierten Objekts sind bekannt. Aus den bekannten Abmessungen des normierten bzw. vorgegebenen Objekts und dem Bild der Kamera des vorausfahrenden bzw, benachbarten Fahrzeugs kann der reale Abstand zu dem benachbarten Fahrzeug berechnet werden. Bei einer konkreten Ausgestaltung des Verfahrens, welches in drei Schritten ausgeführt werden kann. wird in einem ersten Schritt ein amtliches Kennzeichen an dem vorausfahrenden Fahrzeug ermittelt und ggf. plausibilisiert. In einem zweiten Schritt werden bei weiteren Entfernungen (z. B. über 50 m) die Außenabmessungen des amtlichen Kennzeichens für die Abstandsberechnung verwendet.

In einem dritten Schritt (Schritt 3) können bei geringeren Abständen (z. B. unter 50 m) die Schriftzeichen auf dem amtlichen Kennzeichen für eine genauere Abstandsberechnung verwendet werden. Dabei kann eine Zeichenerkennung für alphanumerische Zeichen verwendet werden, die eine genauere Auswertung der Buchstaben- und Zahlenbreite ermöglicht.

Die aus der Abstandsmessung/Abstandsplausibilisierung gewonnene Information kann als Eingangsgröße für eine Geschwindigkeitsregelanlage oder für den Bremsassistenten dienen. Zusätzlich können die Abstandsinformationen, sofern im Fahrzeug vorhanden, von anderen Fahrerassistenzsystemen (z. B. Radar) plausibilisiert werden, Dazu werden die gemessenen Abstände verglichen und bei einer Übereinstimmung als zuverlässig gekennzeichnet oder je nach Übereinstimmung mit einem Gütefaktor bewertet.

Nachfolgend werden die einzelnen Schritte des Verfahrens konkret dargelegt. In einem ersten Schritt soll das für die Abstandsbestimmung herangezogene Objekt mit zumindest teilweise vorgegebener Gestalt (hier ein genormtes amtliches Kennzeichen) sicher identifiziert werden. Das Objekt hat also eine vorgegebene reale Ausdehnung. Dazu wird ein Bild 1 eines benachbarten Fahrzeugs 2 mit einer Kamera des Fahrzeugs aufgenommen. Es ist dann die Lage des amtlichen Kennzeichens 3 am Fahrzeug 2 zu bestimmen. Hierzu kann bei jedem erkannten Rechteck das Seitenverhältnis ausgewertet und mit dem bekannten Seitenverhältnis des amtlichen Kennzeichens verglichen werden. Dabei können einige Varianten des Seitenverhältnisses auftreten, denn es gibt einzeilige Kennzeichen und zweizeilige Kennzeichen. Es lässt sich jedoch allein mit dem Seitenverhältnis bereits mit ziemlicher Sicherheit feststellen, ob es sich bei einem detektierten Rechteck um ein Kennzeichen handelt oder nicht.

Zur weiteren Plausibilisierung des amtlichen Kennzeichens können die erkannten Ausdehnungen bzw. Abmessungen des Rechtecks mit der aus dem Bild 1 erkannten Fahrzeugbreite FB und der erkannten Fahrzeughöhe FH verglichen werden. Im Allgemeinen ist die ,Abmessung eines Fahrzeugs in der Breite ca. 2,0 m (+/- 0,5 m) und in der Höhe 1 m bis 2,5 m. Es lässt sich aufgrund der Relation der Abmessungen eines Rechtecks zu den Abmessungen des Fahrzeugs eine sinnvolle Aussage darüber treffen ob es sich bei dem erkannten Rechteck um ein Kennzeichen handelt. Es werden also die bekannten Größenverhaltnisse der Gegenstände aus der realen Welt genutzt, um aus Bildkomponenten Aussagen über die Identität der realen Komponenten treffen zu können.

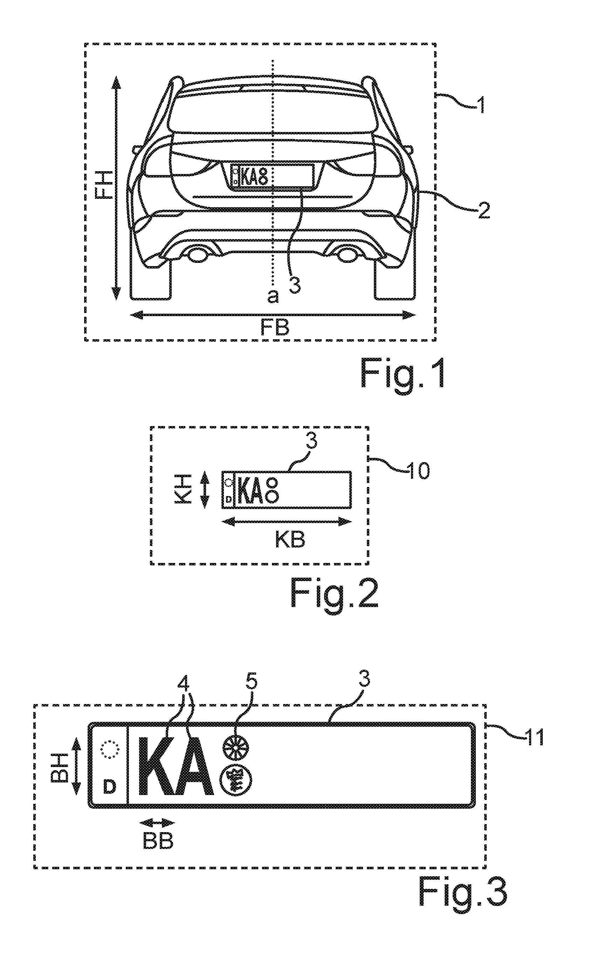

In dem Beispiel von Fig. 1 wird die gesamte hintere Seite des vorausfahrenden Fahrzeugs 2 ausgewertet, um die Lage des amtlichen Kennzeichens 3 zu erkennen. Die Suche nach dem amtlichen Kennzeichen 3 kann auf einer vertikal verlaufenden Mittellinie a, die in dem Bild 1 durch die Mitte des Fahrzeugs 2 verläuft, beginnen, da hier die Wahrscheinlichkeit für die Befestigung des Kennzeichens am größten ist. Wird hier kein Kennzeichen entdeckt, kann die Suche auf die gesamte Rückseite des Fahrzeugs 2 erweitert werden. Bei Erkennen eines Rechtecks kann die oben genannte Plausibilierung mit den Seitenverhältnissen oder mit dem Bezug zu den Fahrzeugabmessungen durchgeführt werden.

In einem zweiten Schritt erfolgt nun die Berechnung des Abstands aufgrund der Höhe und/oder Breite des Kennzeichens 3. Dazu wird entweder das in Fig. 1 dargestellte Bild 1 verwendet, oder aber es wird das Kennzeichen 3 ggf. mit einer veränderten Brennweite der Kamera neu aufgenommen, sodass sich das Bild 10 von Fig. 2 ergibt. In dem Bild 10 ist ein Abbild des realen Kennzeichens zu erkennen, das hier der Einfachheit halber als "Kennzeichen 3" bezeichnet wird. Das Kennzeichen 3 besitzt im Bild 10 eine Kennzeichenbreite KB und eine Kennzeichenhöhe KH. Der Kennzeichenhöhe KH und der Kennzeichenbreite KB kann nun eine Anzahl von Pixel auf dem Bild 10 zugeordnet werden. Diese Anzahl der Pixel lässt sich bei fester bzw. vorgegebener Brennweite der Kamera in eine Entfernung zum vorausfahrenden bzw. benachbarten Fahrzeug umrechnen. Dabei lässt sich zwischen einzeiligen Kennzeichen und zweizeiligen Kennzeichen unterscheiden. Einzeilige amtliche Kennzeichen sind in Realität maximal 520 mm lang und 110 mm hoch, während zweizeilige maximal 340 mm lang und 20 mm hoch sind. Der kameraspezifische Umrechnungsfaktor ist in dem Fahrzeug bzw. der Abstandsbestimmungsvorrichtung hinterlegt.

In einem dritten Schritt soll nun der Abstand zu dem vorausfahrenden Fahrzeug genauer bestimmt werden. Dies ist möglich, wenn das vorausfahrende Fahrzeug nur einen verhältnismäßig geringen Abstand hat und die einzelnen Buchstaben 4 oder Zahlen auf dem Kennzeichen 3 erkannt werden können, Im Prinzip lässt sich dann die Methode des zweiten Schritts auf die alphanumerischen Zeichen des Kennzeichens anwenden, da diese ebenfalls eine feste Größe bzw. Gestalt besitzen.

In dem konkreten Beispiel von Fig. 3 wurde ein Bild 11 von dem amtlichen Kennzeichen des vorausfahrenden Fahrzeugs aufgenommen. Das darin enthaltene Abbild des amtlichen Kennzeichens, d. h, Kennzeichen 3, besitzt als Objekte, die für die Abstandsbestimmung herangezogen werden die Buchstaben 4. Diese lassen sich innerhalb des Kennzeichens 3 auf bekannte Weise identifizieren. In der Realität besitzt ein normiertes Kennzeichen Buchstaben der Höhe BH und der Breite BB. In dem Bild 11 kann jedem der Buchstaben 4 wieder eine Anzahl an Pixeln für Höhe und Breite zugeordnet werden. Aus der Anzahl der Pixel für die Höhe und die Breite lässt sich für eine bestimmte Kamera/Brennweite die Entfernung zum vorausfahrenden Fahrzeug bestimmen,da die Größen BH und BB zumindest bei vorbestimmten Buchstaben/Zahlen genormt, d. h. immer gleich sind.

Ist der Abstand zum vorausfahrenden Fahrzeug noch kürzer, so können noch kleinere Objekte an dem Fahrzeug als Referenz benutzt werden. So kann beispielsweise eine Sicherheitsprüfpiakette 5 (vgl. Fig. 3), die ebenfalls eine vorgegebene feste Größe besitzt, als Referenzobjekt herangezogen werden. Je größer das Abbild dieser Sicherheitsprufplakette 5 ist, desto mehr Pixel können seinem Durchmesser zugeordnet werden und desto näher befindet sich das messende Fahrzeug an dem benachbarten Fahrzeug.

## Patentansprüche

1. Verfahren zum Bestimmen eines Abstands eines Fahrzeugs zu einem benachbarten Fahrzeug durch
- Aufnehmen eines Bilds (1, 10, 11) des benachbarten Fahrzeugs mit einer Kamera des Fahrzeugs,
- identifizieren eines Objekts (3, 4, 5) an dem benachbarten Fahrzeug in dem Bild (1,10,11),
- Ermitteln einer Ausdehnung (KH, KB, BH, BB) des Abbilds des identifizierten Objekts und
- Bestimmen des Abstands der beiden Fahrzeuge anhand der ermittelten Ausdehnung,
**dadurch gekennzeichnet, dass**
- das Objekt (3, 4, 5) eine vorgegebene reale Ausdehnung besitzt, so dass der Abstand alleine aus der Ausdehnung des Abbilds bestimmbar ist.

2. Verfahren nach Anspruch 1,
**dadurch gekennzeichnet, dass**
das Objekt (3, 4, 5) ein amtliches Kennzeichen des benachbarten Fahrzeugs oder ein Teil davon ist.

3. Verfahren nach Anspruch 1,
**dadurch gekennzeichnet, dass**
das Objekt (3, 4, 5) ein Reifen des benachbarten Fahrzeugs ist.

4. Verfahren nach einem der vorhergehenden Ansprüche,
**dadurch gekennzeichnet, dass**
mindestens eine Ausdehnung des Objekts (3, 4, 5) genormt ist.

5. Verfahren nach Anspruch 2,
**dadurch gekennzeichnet, dass**
die Ausdehnung (KH, KB, BH, BB) des Abbilds sich auf die Breite und/oder Höhe der Außenabmessung des Kennzeichens bezieht.

6. Verfahren nach Anspruch 2,
**dadurch gekennzeichnet, dass**
die Ausdehnung (KH, KB, BH, BB) des Abbilds sich auf die Breite und/oder Höhe eines Buchstabens oder einer Zahl des Kennzeichens bezieht.

7. Verfahren nach einem der Ansprüche 1 bis 4,
**dadurch gekennzeichnet, dass**
die Ausdehnung des Abbilds sich auf eine Größe einer Sicherheitsplakette bezieht.

8. Verfahren nach einem der vorhergehenden Ansprüche,
**dadurch gekennzeichnet, dass**
die Identität des Objekts (3, 4, 5) dadurch plausibilisiert wird, dass die Ausdehnung (KH, KB, BH, BB) des Abbilds mit einer weiteren Ausdehnung des Abbilds ins Verhältnis gesetzt wird, und geprüft wird, ob das Verhältnis in einem vorgegebenen Zahlenbereich liegt.

9. Verfahren nach einem der vorhergehenden Ansprüche,
**dadurch gekennzeichnet, dass**
die Identität des Objekts dadurch plausilisiert wird, dass eine Abmessung (FB, FH) des benachbarten Fahrzeugs in dem Bild (1, 10, 11) ermittelt und die Ausdehnung (KH, KB, BH, BB) des Abbilds des Objekts mit der ermittelten Abmessung verglichen wird.

10. Verfahren zum Unterstützen eines Fahrers des Fahrzeugs durch Bestimmen des Abstands zu dem benachbarten Fahrzeug nach einem der vorhergehenden Ansprüche und Anzeigen oder automatisches Verwerten dieses Abstands bei der Fahrzeugführung.

11. Verfahren nach Anspruch 10,
**dadurch gekennzeichnet, dass**
der Abstand zusätzlich auf eine andere Weise bestimmt wird, und damit eine Plausibilisierung des bestimmten Abstands durchgeführt wird.

12. Vorrichtung zum Bestimmen eines Abstands eines Fahrzeugs zu einem benachbarten Fahrzeug mit
- einer Kamera zum Aufnehmen eines Bilds (1. 10, 11) des benachbarten Fahrzeugs,
- einer Auswerteeinrichtung zum Identifizieren eines Objekts (3, 4, 5) an dem benachbarten Fahrzeug in dem Bild, zum Ermitteln einer Ausdehnung (KH, KB, BH, BB) des Abbilds des identifizierten Objekts und zum Bestimmen des Abstands der beiden Fahrzeuge anhand der ermittelten Ausdehnung, **dadurch gekennzeichnet, dass**
- das Objekt (3, 4, 5) eine vorgegebene reale Ausdehnung besitzt, so dass mit der Auswerteeinrichtung der Abstand alleine aus der Ausdehnung des Abbilds bestimmbar ist.

13. Fahrerassistenzeinrichtung für ein Fahrzeug mit einer Vorrichtung nach Anspruch 12.
